# EUROPÄISCHE PATENTSCHRIFT

(11) **EP 0 564 623 B1**
(45) Veröffentlichungstag und Bekanntmachung des Hinweises auf die Patenterteilung: **03.04.1996**
(21) Anmeldenummer: 92921997.0
(22) Anmeldetag: 29.10.1992
(51) Int. Cl.: B60R 21/00

(54) **VORRICHTUNG ZUM ERMITTELN VON FAHRZUSTANDSGRÖSSEN EINES KRAFTFAHRZEUGES**
DEVICE FOR DETECTING RUNNING VARIABLES IN A MOTOR VEHICLE
DISPOSITIF POUR LE CALCUL DE VARIABLES D'ETAT DE DEPLACEMENT D'UN VEHICULE A MOTEUR

(30) Priorität: 31.10.1991 CH 3181/91
(43) Veröffentlichungstag der Anmeldung: 13.10.1993
(73) Patentinhaber: I.M.M. B. Pineroli, CH-8044 Zürich (CH)
(72) Erfinder: I.M.M. B. Pineroli, CH-8044 Zürich (CH)
(74) Vertreter: Schaumburg, Thoenes & Thurn
(86) Internationale Anmeldenummer: CH9200221
(87) Internationale Veröffentlichungsnummer: WO9309008

(56) Entgegenhaltungen:
- WO-A-89/11986
- DE-A- 3 920 091

## Beschreibung

Die Erfindung betrifft eine Vorrichtung zum Ermitteln von Fahrzustandsgrößen eines Kraftfahrzeuges, umfassend mindestens zwei Beschleunigungssensoren zum Erfassen der Längs- und Querbeschleunigung des Kraftfahrzeuges und einer Auswerteschaltung mit einem rückstellbaren Zeitmeßglied, welche aus den Sensorsignalen für eine bestimmte Zeitspanne Beschleunigungswerte ermittelt.

Eine Vorrichtung der vorstehend genannten Art ist beispielsweise aus der DE-A-39 20 091 bekannt. Wie viele andere Vorrichtungen dieser Art dient die dort beschriebene Vorrichtung dazu, beim Auftreten bestimmter Beschleunigungswerte oder einer bestimmten Kombination von Beschleunigungswerten Sicherheitsfunktionen an dem Kraftfahrzeug auszulösen. Solche Sicherheitsfunktionen sind beispielsweise das Aufleuchten eines Warnlichtes, das Ausfahren eines Überrollebügels, die Betätigung eines Gurtstrammers und/oder eines Airbags usw. Allen diesen Vorrichtungen ist gemeinsam, daß sie in der Regel in dem Fahrzeug fest integriert sind.

Der Erfindung liegt die Aufgabe zugrunde, eine einfache und preiswerte Vorrichtung der eingangs genannten Art anzugeben, die fahrzeugunabhängig ist und auch nachträglich in jedes beliebige Fahrzeug eingebaut werden kann und die dennoch unabhängig von einer Betätigung durch den Fahrer arbeitet.

Zur Lösung dieser Aufgabe umfaßt die eingangs genannte Vorrichtung erfindungsgemäß jeweils einen mit dem Signalausgang jedes Beschleunigungssensors verbundenen Signalteiler zum Aufspalten des jeweiligen Sensorsignals in einen die Fahrzeugbeschleunigung kennzeichnenden niederfrequenten Signalanteil (NF-Anteil) und in einen hochfrequenten Signalanteil (HF-Anteil), ein mit den NF-Ausgängen der Signalteiler verbundenes Additionsglied zur vektoriellen Addition der der Längsbeschleunigungskomponente und der Querbeschleunigungskomponente entsprechenden NF-Anteile, eine mit dem Additionsglied und dem Zeitmeßglied verbundene Speichereinheit zum Speichern der errechneten Beschleunigungswerte über der gemessenen Zeit und eine mit den HF-Ausgängen der Signalteiler verbundene Steuereinheit zum Steuern des Zeitmeßgliedes.

Der HF-Anteil der Sensorsignale erfaßt Vibrationen des Fahrzeuges, und Schallwellen wie Motorgeräusche und/oder Rollgeräusche. Damit ist es möglich, die erfindungsgemäße Vorrichtung in Abhängigkeit des Betriebszustandes des Fahrzeuges zu steuern, d.h. also beispielsweise das Zeitmeßglied beim Einschalten des Motors einzuschalten, ohne daß deswegen die Vorrichtung mit dem Zündschloß gekoppelt sein müßte. Gerade dieses Merkmal macht das Gerät fahrzeugunabhängig und ermöglicht einen problemlosen nachträglichen Ein- und Ausbau der Vorrichtung.

Die Speicherung der Beschleunigungswerte über der Zeit ermöglicht eine Analyse des Fahrverhaltens des Fahrers. Aus den gespeicherten Werten läßt sich ablesen, ob der Fahrer über die Meßzeit hin besonders stark beschleunigt oder abgebremst hat, ob er Kurven sehr rasant genommen hat usw. Diese Werte können mit einem Durchschnittsdiagramm verglichen werden, um so das Fahrverhalten des Fahrers bewerten zu können.

Wenn nur Beschleunigungswerte oberhalb eines bestimmten Pegels erfaßt werden sollen, ist es zweckmäßig, wenn zwischen dem NF-Ausgang des jeweiligen Beschleunigungssensors und dem Additionsglied jeweils eine Komponenten-Schwellwertschaltung angeordnet ist, die nur einen NF-Anteil, der einen für die jeweilige Beschleunigungskomponente vorgegebenen Schwellwert überschreitet, an das Additionsglied weitergibt.

Um das Einschalten des Zeitmeßgliedes und damit die Inbetriebnahme der Vorrichtung durch nicht vom Fahrzeug ausgehende Vibrationen oder Geräusche möglichst weitgehend zu vermeiden, kann die Steuereinheit einen das Zeitmeßglied steuernden Hauptschalter und eine mit den HF-Ausgängen der Signalteiler verbundene zweite Schwellwertschaltung umfassen, welche den Hauptschalter einschaltet, wenn der HF-Anteil mindestens eines der beiden Beschleunigungssignale einen fortgegebenen Schwellwert überschreitet. Noch größere Sicherheit gegen Fremdeinflüsse erhält man dadurch, daß der zweiten Schwellwertschaltung ein erstes Zeitglied nachgeschaltet ist, daß den Hauptschalter ausschaltet, wenn der HF-Anteil beider Beschleunigungssignale für eine vorgegebene Erstzeitspanne unter dem Schwellwert der zweiten Schwellwertschaltung bleibt. Auf der einen Seite kann dadurch der Schwellwert so weit erniedrigt werden, daß sich die Vorrichtung auch bei einem relativ vibrationsarm rollenden Fahrzeug einschaltet, auf der anderen Seite wird damit zwischen einem kontinuierlichen Betrieb des Fahrzeugs und kurz dauernden Fremdeinflüssen unterschieden.

Das Einschalten der Vorrichtung bzw. des Zeitmeßgliedes kann auch davon abhängig gemacht werden, daß die erfaßten Beschleunigungswerte einen bestimmten Schwellwert überschreiten. So kann die Steuereinheit eine mit den NF-Ausgängen der Signalteiler verbundene dritte Schwellwertschaltung und ein dieser nachgeschaltetes zweites Zeitglied umfassen, das den Hauptschalter ausschaltet, wenn der NF-Anteil beider Beschleunigungssignale für eine vorgegebene zweite Zeitspanne unter dem Schwellwert der dritten Schwellwertschaltung bleibt.

Bei einem nachträglichen Einbau der Vorrichtung, insbesondere wenn es sich um ein Gerät handeln soll, das auch gegebenenfalls von Laien eingebaut werden kann, besteht die Gefahr, daß das Gerät mit den Meßachsen der Beschleunigungssensoren nicht so präzise eingebaut wird, daß eine korrekte oder optimale Arbeitsweise gewährleistet ist. Aus diesem Grunde wird erfindungsgemäß vorgeschlagen, daß die Auswerteinheit eine mit den NF-Ausgängen der Signalteiler verbundene Recheneinheit umfaßt, die aus den NF-Signalanteilen die Art der Beschleunigungskomponenten bestimmt, und daß in dem NF-Signalweg zwischen den Beschleunigungssensoren und dem Additionsglied eine Umschalteinrichtung angeordnet ist, welche die jeweils einer bestimmten Beschleunigungskomponente zugeordneten Eingänge des Additionsgliedes abhängig von dem von der Recheneinheit ermittelten Ergebnis mit dem zugehörigen Beschleunigungssensor verbindet. So kann beispielsweise aus dem Signalverlauf errechnet werden, ob das Signal eine Querbeschleunigung oder eine Längsbescheinigung des Kraftfahrzeuges wiedergibt. Die Recheneinheit kann damit bestimmen, welcher Sensor des eingebauten Gerätes die Daten über die Querbeschleunigung und welcher die Daten über die Längsbeschleunigung liefert. Entsprechend können die Sensoren über die Umschalteinrichtung mit dem Additionsglied verbunden werden, um so eine korrekte Arbeitsweise des Gerätes zu gewährleisten. Vorausgesetzt ist dabei, daß die Sensoren jeweils auf beide Arten der Beschleunigung ansprechen können.

Um eine einfache Auswertung der ermittelten Daten vornehmen zu können, ist es zweckmäßig, wenn die erfindungsgemäße Erfindung eine Anzeigevorrichtung umfaßt, auf der die in der Speichereinheit gespeicherten Beschleunigungsdaten in Form einer graphischen Darstellung der Beschleunigungswerte über der Zeit wiedergegeben werden können.

Weitere Merkmale und Vorteile ergeben sich aus der folgenden Beschreibung, welche in Verbindung mit den beigefügten Zeichnungen die Erfindung anhand eines Ausführungsbeispieles erläutert. Es zeigen:
- Figur 1: eine schematische Darstellung der Beschleunigungsmeßachsen in einem Fahrzeug,
- Figur 2: eine graphische Darstellung des von dem erfindungsgemäßen Gerät ermittelten Verlaufs der Beschleunigungswerte über der Zeit,
- Figur 3: ein Blockschaltbild der erfindungsgemäßen Vorrichtung und
- Figur 4: ein detaillierteres Funktionsschema der erfindungsgemäßen Vorrichtung.

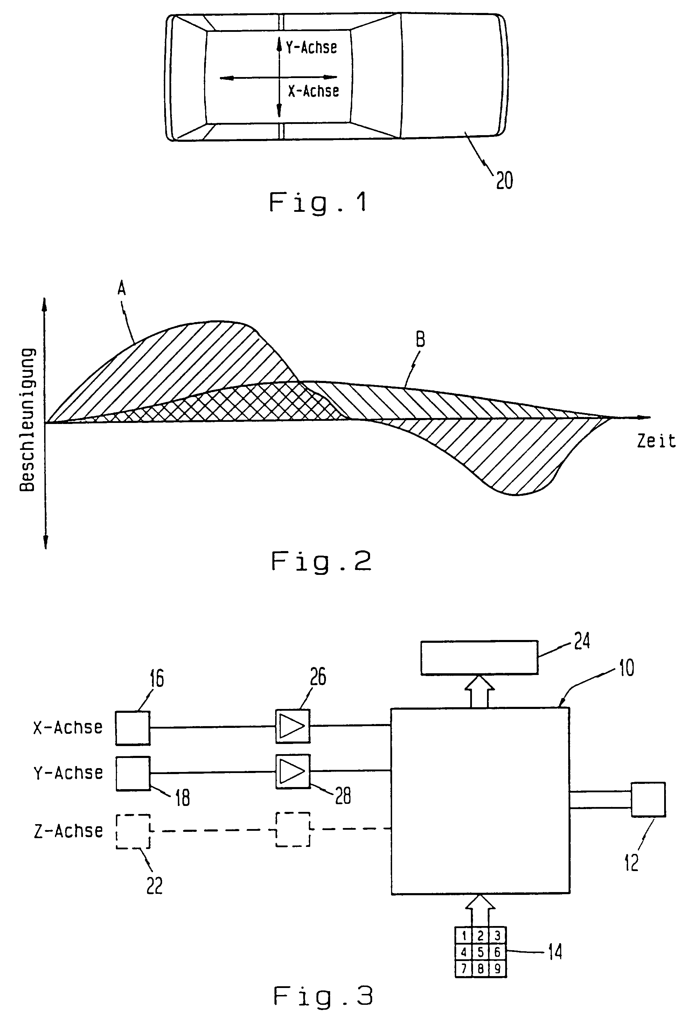

Gemäß Figur 3 umfaßt das erfindungsgemäße Gerät einen Mikroprozessor 10, der über eine Batterie 12 gespeist wird. Über eine Tastatur 14 können wählbare Betriebsdaten wie beispielsweise die unten noch zu erläuternden Schwellwerte in den Mikroprozessor eingegeben werden. Ferner ist der Mikroprozessor mit zwei Beschleunigungssensoren 16 und 18 verbunden. Die Meßachse des Beschleunigungssensors 16 ist beim Einbau des Gerätes in ein Fahrzeug 20 (Figur 1) parallel zur Fahrzeuglängsachse gerichtet und erfaßt somit eine Längsbeschleunigung. Die Meßachse des Beschleunigungssensors 18 ist senkrecht hierzu gerichtet und erfaßt somit die Querbeschleunigung des Fahrzeuges 20. Gegebenenfalls kann auch noch ein dritter Beschleunigungssensor 22 vorgesehen sein, dessen Meßachse parallel zur Z- oder Hochachse gerichtet ist. Da dieser Sensor bei Kraftfahrzeugen üblicherweise jedoch nicht benötigt wird, ist er in Figur 3 auch nur gestrichelt dargestellt.

Der Mikroprozessor 10 wertet die von den Sensoren 16, 18, 22 gelieferten Signale aus und steuert eine Anzeigevorrichtung 24 an, auf der beispielsweise in einer graphisen Darstellung gemäß Figur 2 die ermittelten Beschleunigungswerte über der Meßzeit aufgetragen werden (Kurve A in Figur 2). Dazu kann beispielsweise auch ein Referenzwert (Kurve B) angezeigt werden. Dies erlaubt den Vergleich der aktuellen Werte mit einem üblichen Referenzwert und damit eine Bewertung des Fahrverhaltens des Fahrers gegenüber einem durchschnittlichen Fahrverhalten.

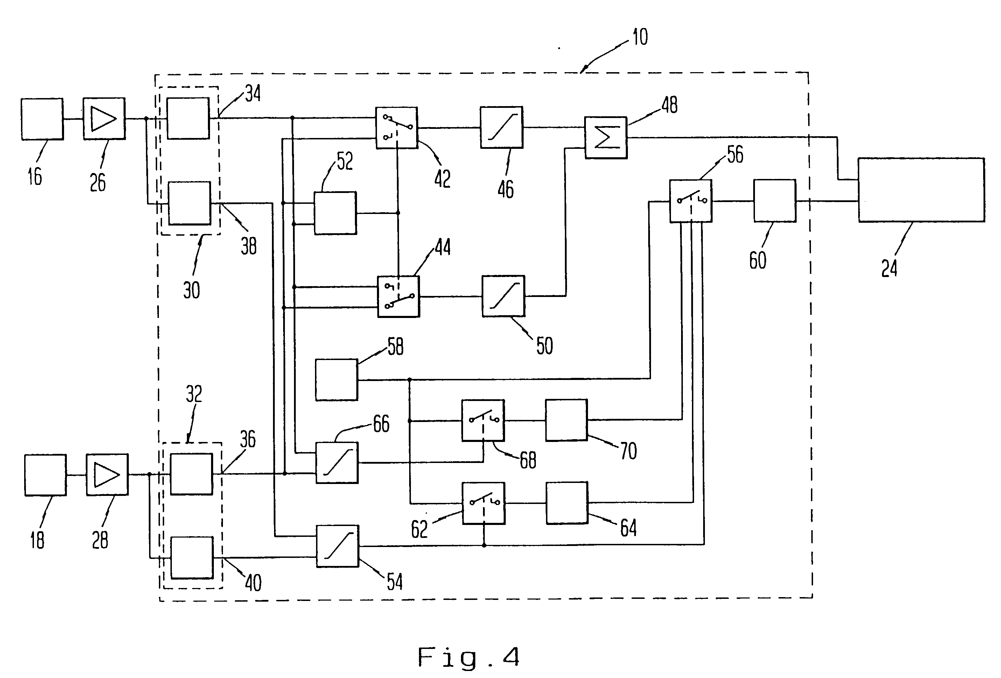

Im folgenden sollen nun anhand des detaillierteren Blockschaltbildes der Figur 4 die Funktion der erfindungsgemäßen Vorrichtung im einzelnen erläutert werden. Gleiche Teile sind dabei wieder mit gleichen Bezugszeichen versehen. Das Schema zeigt eine Anordnung mit zwei Beschleunigungssensoren.

Jeder der Sensoren 16 und 18 ist über einen Adapter oder eine Schnittstelle 26 bzw. 28 mit dem Mikroprozessor verbunden. Jedem Sensor 16 bzw. 18 ist ein Signalteiler 30 bzw. 32 nachgeschaltet, der im wesentlichen aus zwei Filterschaltungen besteht und einen NF-Ausgang 34 bzw. 36 für einen niederfrequenten Signalanteil und einen HF-Ausgang 38 bzw. 40 für einen hochfrequenten Signalanteil hat. Als niederfrequent wird dabei beispielsweise der Bereich von 0 bis 10 Hz und als hochfrequent der Bereich von cirka 20 bis 500 Hz bezeichnet. Das niederfrequente Spektrum nimmt die Beschleunigungssignale des Fahrzeugs auf, die vom Fahrer beeinflußt werden, d.h. Beschleunigen des Fahrzeugs, Abbremsen des Fahrzeuges und Kurvenfahrt. Im HF-Anteil des Signals sind Vibrationen des Fahrzeuges wie Motorvibrationen, Rollgeräusche, Bodenunebenheiten usw. enthalten. Dieser Frequenzanteil dient, wie noch zu erläutern ist, der Steuerung des Gerätes.

Die NF-Ausgänge 34 und 36 der beiden Signalteiler 30 bzw. 32 sind jeweils mit einem Umschalter 42 bzw. 44 verbunden. Der Umschalter 42 ist über eine Komponenten-schwellwertschaltung 46 für die X (Längsbeschleunigungs)-Komponente mit einem Additionsglied 48 verbunden. Der Umschalter 44 ist über eine Komponentenschwellwertschaltung 50 für die Y (Querbeschleunigungs)-Komponente mit einem weiteren Eingang des Additionsgliedes 48 verbunden. In dem dargestellten Ausführungsbeispiel sind die Umschalter 42 und 44 so dargestellt, daß der Sensor 16 mit der Komponentenschwellwertschaltung 46 und der Sensor mit der Komponentenschwellwertschaltung 50 in Verbindung steht. Beim Umschalten der beiden Umschalter 42 und 44 in ihre jeweils andere Schaltstellung werden diese Verbindungen vertauscht. Das Umschalten der Umschalter 42 und 44 erfolgt unter der Steuerung einer Recheneinheit 52, die ebenfalls mit den NF-Ausgängen 34 und 36 verbunden ist und aus den gelieferten Signalen ermittelt, welche Art von Beschleunigung von den Sensoren 16 bzw. 18 erfaßt wird. Je nachdem wie die Meßachsen der Sensoren 16 und 18 ausgerichtet sind, werden diese dann über die Umschalter 42 und 44 mit der zu ihnen gehörigen Komponentenschwellwertschaltung 46 bzw. 50 verbunden.

Die HF-Ausgänge 38 und 40 der Signalteiler 30 bzw. 32 sind mit einer zweiten Schwellwertschaltung 54 verbunden, die einen gewissen Schwellwert für das zu verarbeitende HF-Signal vorgibt. Wird dieser Schwellwert erreicht oder überschritten, betätigt die Schwellwertschaltung 54 einen Hauptschalter 56, der dadurch geschlossen wird und damit eine Verbindung zwischen dem Systemtaktgeber 58 des Mikroprozessors 10 und einem Betriebszeitzähler 60 herstellt, d.h. diesen einschaltet. Die Schwellwertschaltung 54 steuert einen weiteren Schalter 62 in der Weise, daß dann, wenn das HF-Signal beider Sensoren 16 und 18 den vorgegebenen Schwellwert der Schwellwertschaltung 54 unterschreitet, ein Zeitglied 64 gesetzt wird, nach dessen Ablauf (z.B. 10 Sekunden) der Hauptschalter 56 geöffnet, d.h. der Betriebszeitzähler 60 ausgeschaltet wird.

Die NF-Ausgänge 34 und 36 der Signalteilerschaltungen 30 bzw. 32 sind ferner mit einer dritten Schwellwertschaltung 66 verbunden, die einen Schwellwert für die Beschleunigungssignale festlegt. Unterschreiten die Beschleunigungssignale diesen vorgegebenen Schwellwert, so veranlaßt die Schwellwertschaltung 66 über einen Schalter 68, daß ein weiteres Zeitglied 70 gesetzt wird. Nach Ablauf der an diesem Zeitglied 70 eingestellten Zeit (beispielsweise cirka 5 Minuten) wird der Schalter 56 geöffnet, wodurch der Betriebszeitzähler 60 ausgeschaltet wird.

Die soweit beschriebene Vorrichtung arbeitet folgendermaßen:

Beim Einschalten des Motors werden Vibrationen erzeugt, die sich in einem HF-Anteil des von den Sensoren 16 und 18 gelieferten Signals ausdrücken. Überschreiten diese Vibrationen einen an der Schwellwertschaltung 54 vorgegebenen Wert, so wird der Schalter 56 geschlossen und der Betriebszeitzähler 60 eingeschaltet. Treten nun in der am Zeitglied 70 eingestellten Zeit keine Beschleunigungswerte auf, welche den an der Schwellwertschaltung 66 eingestellten Schwellwert überschreiten (weil beispielsweise das Fahrzeug stehen bleibt) dann wird der Betriebszeitenzähler 60 wieder ausgeschaltet. Setzt sich dagegen das Fahrzeug in Bewegung und überschreiten die vom Sensor 16 gelieferten Beschleunigungswerte den an der Komponentenschwellwertschaltung 46 eingestellten Wert so wird dieser Wert dem Additionsglied 48 zugeführt. Das Gleiche gilt für die von dem Sensor 18 gelieferten Beschleunigungswerte. Von dem Additionsglied 48 werden die Beschleunigungswerte vektoriell addiert. Der so ermittelte Gesamtbeschleunigungswert wird der Anzeigeeinheit 24 zugeführt. Die Anzeigeeinzeit 24 enthält einen Speicher, in welcher die ermittelten Beschleunigungswerte zusammen mit den von dem Betriebszeitzähler 60 ermittelten Zeitwerten gespeichert werden. Ferner liefert die Anzeigeeinheit 24 eine graphische Darstellung, in der gemäß der Darstellung in Figur 2 die Beschleunigungswerte über der verstrichenen Zeit aufgetragen werden.

Zusätzlich oder auch anstelle der graphischen Darstellung in der Anzeigeeinheit kann vorgesehen sein, daß der Mikroprozessor aus dem Vergleich der Kurven A und B eine Punktezahl errechnet, welche eine Bewertung für das Fahrverhalten des Fahrers liefert.

Ferner kann vorgesehen sein, daß in dem Mikroprozessor rechnerisch der Mittelwert der von den Sensoren gelieferten Signale laufend neu berechnet wird, um auf diese Weise Einflüsse von Temperatur und Alterung auf die Sensoren eliminieren zu können. Ferner lassen sich auch Steigungen und Gefälle herausrechnen, so daß auch bei Paßfahrten beispielsweise nur die vom Fahrer beeinflußbaren Beschleunigungswerte registriert und aufgezeichnet werden.

Sollten die von dem Motor des Fahrzeuges und von den Rollgeräuschen herrührenden Vibrationen zu schwach sein, um von den Beschleunigungssensoren erfaßt zu werden, könnte das zur Steuerung erforderliche HF-Signal auch von einem Mikrophon erzeugt werden.

## Patentansprüche

1. Vorrichtung zum Ermitteln von Fahrzustandsgrößen eines Kraftfahrzeuges, umfassend mindestens zwei Beschleunigungssensoren (16, 18) zum Erfassen der Längs- und Querbeschleunigung des Kraftfahrzeuges (20) und einer Auswerteschaltung (10) mit einem rückstellbaren Zeitmeßglied (60), welche aus den Sensorsignalen für eine bestimmte Zeitspanne Beschleunigungswerte ermittelt, **gekennzeichnet** durch jeweils einen mit dem Signalausgang jedes Beschleunigungssensors (16, 18) verbundenen Signalteiler (30, 32) zum Aufspalten des jeweiligen Sensorsignals in einen die Fahrzeugbeschleunigung kennzeichnenden niederfrequenten Signalanteil (NF-Anteil) und in einen hochfrequenten Signalanteil (HF-Anteil), ein mit den NF-Ausgängen (34, 36) der Signalteiler (30, 32) verbundenes Additionsglied (48) zur vektoriellen Addition der der Längsbeschleunigungskomponente (X) und der Querbeschleunigungskomponente (Y) entsprechenden NF-Anteile beider Sensorsignale, eine mit dem Additionsglied (4) und dem Zeitmeßglied (60) verbundene Speichereinheit 24 zum Speichern der errechneten Beschleunigungswerte über der gemessenen Zeit und eine mit den HF-Ausgängen (38, 40) der Signalteiler (30, 32) verbundene Steuereinheit (54, 56, 62, 64) zum Steuern des Zeitmeßgliedes (60).

2. Vorrichtung nach Anspruch 1, dadurch **gekennzeichnet**, daß zwischen dem NF-Ausgang (34, 36) des jeweiligen Beschleunigungssensors (16, 18) und dem Additionsglied (48) jeweils eine Komponentenschwellwertschaltung (46, 50) angeordnet ist, die nur einen NF-Anteil, der einen für die jeweilige Beschleunigungskomponente (X,Y) vorgegebenen Schwellwert überschreitet, an das Additionsglied (48) weitergibt.

3. Vorrichtung nach Anspruch 1 oder 2, dadurch **gekennzeichnet**, daß die Steuereinheit einen das Zeitmeßglied (60) steuernden Hauptschalter (56) und eine mit den HF-Ausgängen (38, 40) der Signalteiler (30, 32) verbundene zweite Schwellwertschaltung (54) umfaßt, welche den Hauptschalter (56) einschaltet, wenn der HF-Anteil mindestens einen der beiden Beschleunigungssignale einen vorgegebenen Schwellwert überschreitet.

4. Vorrichtung nach Anspruch 3, dadurch **gekennzeichnet**, daß der zweiten Schwellwertschaltung (54) ein erstes Zeitglied (64) nachgeschaltet ist, das den Hauptschalter (56) ausschaltet, wenn der HF-Anteil beider Beschleunigungssignale für eine vorgegebene erste Zeitspanne unter dem Schwellwert der zweiten Schwellwertschaltung (54) bleibt.

5. Vorrichtung nach Anspruch 3 oder 4, dadurch **gekennzeichnet**, daß die Steuereinheit eine mit den NF-Ausgängen (34, 36) der Signalteiler (30, 32) verbundene dritte Schwellwertschaltung (66) und ein dieser nachgeschaltetes zweites Schaltglied umfaßt, das den Hauptschalter (56) ausschaltet, wenn der NF-Anteil (34, 36) beider Beschleunigungssignale für eine vorgegebene zweite Zeitspanne unter dem Schwellwert der dritten Schwellwertschaltung (66) bleibt.

6. Vorrichtung nach einem der Ansprüche 1 bis 5, dadurch **gekennzeichnet**, daß die Auswerteeinheit eine mit den NF-Ausgängen (34, 36) der Signalteiler (30, 32) verbundene Recheneinheit (52) umfaßt, die aus den NF-Signalanteilen die Art der Beschleunigungskomponenten (X,Y) bestimmt und daß in den NF-Signalweg zwischen den Beschleunigungssensoren (16, 18) und dem Additionsglied (48) eine Umschalteinrichtung (42, 44) angeordnet ist, welche die jeweils einer bestimmten Beschleunigungskomponente zugeordneten Eingänge des Additionsglieds (48) abhängig von dem von der Recheneinheit (52) ermittelten Ergebnis mit den zugehörigen Beschleunigungssensoren verbindet.

7. Vorrichtung nach einem der Ansprüche 1 bis 6, **gekennzeichnet** durch eine Anzeigevorrichtung (24) zur Darstellung des in der Speichereinheit gespeicherten Verlaufs der Beschleunigungswerte über der Zeit.

## Claims

1. Apparatus for determining motor vehicle running variables, comprising at least two acceleration sensors (16, 18) for detecting the longitudinal and transverse acceleration of the motor vehicle (20) and an evaluation circuit (10) comprising a resettable time measuring element (60) which determines acceleration values from the sensor signals for a specific interval of time, characterised by a signal divider (30, 32) connected to the signal output of each acceleration sensor (16, 18) for dividing the associated sensor signal into a low-frequency signal component (LF-component) identifying the vehicle acceleration, and a high-frequency signal component (HF-component), an addition element (48) connected to the LF-outputs (34, 36) of the signal dividers (30, 32) for vectorial addition of the LF-components of the two sensor signals corresponding to the longitudinal acceleration component (X) and the transverse acceleration component (Y), a memory unit (24) connected to the addition element (4) and the time measuring element (60) for storing the calculated acceleration values over the measured time and a control unit (54, 56, 62, 64) connected to the HF-outputs (38, 40) of the signal dividers (30, 32) for controlling the time measuring element (60).

2. Apparatus according to claim 1, characterised in that a component threshold circuit (46, 50) is disposed between the LF-output (34, 36) of each acceleration sensor (16, 18) and the addition element (48) and transmits to the addition element (48) only an LF-component exceeding a threshold predetermined for the associated acceleration component (X, Y).

3. Apparatus according to claim 1 or 2, characterised in that the control unit comprises a main switch (56) controlling the time measuring element (60) and a second threshold circuit (54) connected to the HF-outputs (38, 40) of the signal dividers (30, 32) to switch on the main switch (56) when the HF-component of at least one of the two acceleration signals exceeds a predetermined threshold.

4. Apparatus according to claim 3, characterised in that the second threshold circuit (54) is followed by a first time element (64) which switches off the main switch (56) when the HF-component of the two acceleration signals remains below the threshold of the second threshold circuit (54) for a predetermined first interval of time.

5. Apparatus according to claim 3 or 4, characterised in that the control unit comprises a third threshold circuit (66) connected to the LF-outputs (34, 36) of the signal dividers (30, 32) and a second switching element following said third threshold circuit to switch off the main switch (56) when the LF-component (34, 36) of the two acceleration signals remains below the threshold of the third threshold circuit (66) for a predetermined second interval of time.

6. Apparatus according to any one of claims 1 to 5, characterised in that the evaluation unit comprises a computer unit (52) connected to the LF-outputs (34, 36) of the signal divider (30, 32), such unit determining the nature of the acceleration components (X, Y) from the LF-signal components and in that the LF-signal path between the acceleration sensors (16, 18) and the addition element (48) contains a changeover device (42, 44) which, depending on the result determined by the computer unit (52), connects to the associated acceleration sensors the inputs of the addition element (48) each associated with a specific acceleration component.

7. Apparatus according to any one of claims 1 to 6, characterised by a display means (34) whereby the course of the acceleration values stored in the memory unit is displayed over time.

## Revendications

1. Dispositif pour capter des paramètres d'état de marche d'un véhicule automobile, comprenant au moins deux capteurs d'accélération (16, 18) pour déterminer l'accélération longitudinale et transversale du véhicule automobile (20) et un circuit d'analyse (10) comportant un organe de mesure du temps (60) à remise à zéro, ledit dispositif déterminant des valeurs d'accélération pendant un intervalle de temps déterminé sur la base des signaux des capteurs, caractérisé en ce qu'il comprend des diviseurs de signaux (30, 32) connectés respectivement à la sortie de signaux des capteurs d'accélération (16, 18) pour dissocier le signal de chacun des capteurs en une fraction à basse fréquence (fraction BF) du signal, qui est représentative de l'accélération du véhicule, et une fraction à haute fréquence (fraction HF) du signal, un organe additionneur (48) connecté aux sorties BF (34, 36) des diviseurs de signaux (30, 32), pour effectuer l'addition vectorielle des fractions BF des deux capteurs de signaux qui correspondent aux composantes longitudinale (X) et transversale (Y) de l'accélération, une unité de mémoire (24) connectée à l'organe additionneur (48) et à l'organe de mesure du temps (60) pour mémoriser les valeurs d'accélération calculées pendant le temps mesuré, et une unité de commande (54, 56, 62, 64) connectée aux sorties HF (38, 40) des diviseurs de signaux (30, 32), pour commander l'organe de mesure du temps (60).

2. Dispositif selon la revendication 1, caractérisé en ce qu'entre la sortie BF (34, 36) du capteur d'accélération respectif (16, 18) et l'organe additionneur (48), est interposé un circuit (46, 50) de valeur de seuil de composante qui ne transmet à l'organe additionnel (48) qu'une fraction BF qui est supérieure à une valeur seuil prédéterminée pour la composante d'accélération considérée (X, Y).

3. Dispositif selon la revendication 1 ou 2, caractérisé en ce que l'unité de commande comprend un interrupteur principal (56) qui commande l'organe de mesure du temps (60), et un deuxième circuit de valeur de seuil (54) connecté aux sorties HF (38, 40) des diviseurs de signaux (30, 32), qui met l'interrupteur principal (56) à l'état actif lorsque la fraction HF devient supérieure d'une valeur de seuil prédéterminée à au moins un des deux signaux d'accélération.

4. Dispositif selon la revendication 3, caractérisé en ce qu'en aval du deuxième circuit de valeur de seuil (54) est connecté un premier organe temporisateur (64) qui met l'interrupteur principal (56) à l'état inactif lorsque la fraction HF des deux signaux d'accélération reste inférieure à la valeur de seuil du deuxième circuit à seuil (54) pendant un premier intervalle de temps prédéterminé.

5. Dispositif selon la revendication 3 ou 4, caractérisé en ce que l'unité de commande comprend un troisième circuit de valeur de seuil (66) connecté aux sorties BF (34, 36) des diviseurs de signaux (30, 32), et un deuxième organe interrupteur connecté en aval de ce troisième circuit, qui met l'interrupteur principal (56) à l'état inactif lorsque la fraction BF (34, 36) des deux signaux d'accélération reste inférieure à la valeur de seuil du troisième circuit à seuil (66) pendant un deuxième intervalle de temps prédéterminé.

6. Dispositif selon l'une des revendications 1 à 5, caractérisé en ce que l'unité d'analyse comprend une unité de calcul (52) connectée aux sorties BF (34, 36) des diviseurs de signaux (30, 32), qui détermine la nature des composantes d'accélération (X, Y) sur la base des fractions BF des signaux, et en ce que, sur le trajet des signaux BF, est intercalé, entre les capteurs d'accélération (16, 18) et l'organe additionneur (48), un dispositif de commutation (42, 44) qui, en fonction du résultat calculé par l'unité de calcul (52), connecte les entrées de l'organe additionneur (48) respectivement associées à des composantes déterminées de l'accélération aux capteurs d'accélération correspondants.

7. Dispositif selon l'une des revendications 1 à 6, caractérisé par un dispositif d'affichage (24) servant à présenter la courbe de variation des valeurs d'accélération en fonction du temps, mémorisée dans l'unité de mémoire.
